# EUROPEAN PATENT APPLICATION

(11) **EP 3 978 228 A1**
(43) Date of publication of application: **06.04.2022**
(21) Application number: 20000359.8
(22) Date of filing: 02.10.2020
(51) Int. Cl.: B31B 70/81, B65F 1/00, B29C 65/02, B29C 65/48, B29K 23/00

(54) **WASTE COLLECTION BAG EQUIPPED WITH AN RFID TAG, METHOD AND APPARATUS FOR INSERTING AN RFID TAG INTO A WASTE COLLECTION BAG**

(71) Applicant: RF-IT Hungary Informatikai, Kereskedelmi és Tanácsadó Kft., 1031 Budapest (HU)
(72) Inventor: Fazekas, András, H-4150 Püspökladány (HU)

(57) **Abstract**

This patent application relates to a waste collection bag equipped with an RFID tag, and a method and apparatus for inserting an RFID tag into a waste collection bag, in which method the apparatus inserts an RFID tag (20) written with unique data into the bottom part of a waste collection bag (39) and forms a sealed pocket (38) around the RFID tag (20) from the material of the tubular film (19) itself. Waste collection bags (39) equipped with an RFID tag (20) containing unique identification data, together with the use of waste collection vehicles equipped with an RFID reader system, used more and more widely in the field of waste collection, make it possible to determine whether the waste removal service is used legally.

## Description

This patent application relates to a waste collection bag equipped with an RFID tag, and a method and apparatus for inserting an RFID tag into a waste collection bag, in which method the apparatus inserts an RFID tag written with unique data into the bottom part of a waste collection bag and forms a sealed pocket around the RFID tag from the material of the tubular film itself. Waste collection bags equipped with an RFID tag containing unique identification data, together with the use of waste collection vehicles equipped with an RFID reader system, used more and more widely in the field of waste collection, make it possible to determine whether the waste removal service is used legally.

Nowadays, increased waste production is one of the most important environmental problems. For controlling events related to waste, it is important to monitor, identify and record waste removal. A known solution is to use identification and data collection systems based on the RFID (Radio Frequency IDentification) technology, where waste removal is controlled by identifying the waste collection bin from which the waste is removed and the user removing the waste. The essence of solutions based on the RFID technology is that waste containers are equipped with an RFID tag containing unique data, which can be detected at the moment of waste removal by an RFID terminal located on the waste collection vehicle, the information stored on it can be read, and the event of removal can be recorded with time and location based on the GPS coordinates. The system records any object, e.g. bag, junk, other waste that does not have an RFID tag, as an event of illegal use of the waste removal service. In addition to the software, the proper positioning and protection of the RFID tag on the waste container is also a basic criterion for successful reading.

RFID tags are made of paper or plastic. In the case of waste collection bags, as they are intended for single use, the insertion of an RFID tag made of plastic is a very expensive solution. Therefore, for waste collection bags an RFID tag made of paper is preferable, however, it can be easily damaged.

The prior art includes a number of solutions that disclose a waste management system based on RFID identification, approaching it both from the side of waste containers and waste collection vehicles.
Hungarian patent application No. P1100573 discloses a waste collection recording system that detects the events of manual and mechanical waste removal in time and space by means of an RFID tag placed on the waste collection bins, and an RFID, a GPS and a camera module placed on the waste collection vehicles.
Hungarian utility model No. 4913 is an additional electronic device that, when connected to a waste collection vehicle and an RFID reader, allows the identification of waste collection bins equipped with a unique RFID identifier, and the determination of whether the waste removal service is used legally. With this device, any waste collection vehicle can be made suitable for recording the events of waste removal on the basis of the RFID technology.

Waste containers can be equipped with an RFID tag in several ways. The transponders most widely used in waste management are transponders that can be placed into threads formed during manufacturing or pre-drilled bores in the waste collection bins, but tags attached to the surface by screws, rivets or welding are also used. Patent application No. US 20140312124 discloses an RFID assembly including a spring clip for securing it to the upper rim of a waste collection bin/container, and an RFID device, which can be an RFID tag, enclosed in two halves of a case. Patent applications No. US 9546040 and No. US 20060273180 disclose RFID tags attached to the side of waste receptacles. Patent application No. US 6191691 discloses a bin for collecting waste having a transponder containing information secured thereto by fixing means fastened to its side, in which a transponder can be secured mechanically.
For the identification of waste collection bags RFID tags are used. The following options are known for attaching an RFID tag to a waste collection bag. International patent applications with publication Nos. WO/2010/112668 and WO/2010/112669 disclose a solution according to which the registering of the events of waste removal in bags is solved by providing waste collection bags with a closing means comprising an RFID identifier. The closing means comprising an RFID identifier is a sticker tape that can be attached to any waste collection bag, sack or carrier bag, it has an adhesive surface on one side, and various information on the other side, e.g. a colour code, text or marking corresponding to the type of the waste. Waste collection bags provided with an RFID identifier can be identified at the moment of removal and, after collection, can be subjected to the appropriate waste management process on the basis of the information stored on the RFID tag.
The closing means comprising an RFID tag can be supplied to users e.g. in rolls or as sheets containing a number of closing means. A disadvantage of the solution is that the user has to attach a closing means to the waste collection bag before waste removal. If the user fails to attach a closing means comprising an RFID tag, the removal of waste is recorded as an event of illegal use of the service.

U.S. Patent No. US 9,090,399 discloses a closing system and associated method for closing and handling waste or recyclable material, which utilizes in the closing system a closing device which is provided with an RFID identifier. The carrier bag is filled with waste and closed by knotting its carrying loops, an RFID tag having an adhesive surface is placed on top of the knot to prevent the opening of the knot, and if necessary, a second knot can be made with the carrying loops on top of the knot covered by the RFID tag.

International patent application with publication No. WO/2006/096101 discloses a disposable waste container, which waste container is provided with means readable based on radio frequencies. The waste container consists of a thin-walled bag of a flexible material, such as plastic, paper, metal or a combination thereof, and a closure to prevent waste in the bag from being spread outside the bag. Moreover, means readable based on radio frequencies, such as an RFID tag or the like, can be attached to the bag by means of an adhesive, such as glue.

Patent application with publication No. CN108932545A relates to an RFID encapsulating printing machine, which inserts an RFID chip between the layers of a double-layer packaging material, and prints information on the packaging material. The encapsulating printing machine comprises an unwinding unit for unwinding the double-layer packaging material, a printing unit for printing on the outer surface of the packaging material, an encapsulation unit, and a winding unit for winding the product. In the encapsulation unit, the layers of the double-layer packaging material are separated by an opening mechanism, and after the separation of the layers an attaching mechanism attaches an RFID chip to the inner surface of one of the layers of the double-layer packaging material. After the insertion of the RFID chip, a laminating mechanism re-closes the layers of the double-layer packaging material, enclosing the RFID chip between the two layers. The finished product is wound by a winding roller in the winding unit. Thus, this machine encapsulates an RFID chip in a sticker and prints information on it. The method has a low manufacturing cost and realizes continuous production.

A disadvantage of the above solutions is that the RFID tag is attached to a waste collection bag either in itself or with only minimum protection. Since paper-based RFID tags are not waterproof and their readability can decrease rapidly or can be completely ruined by water or physical damage (e.g. spilled chemical), in rainy or snowy periods, or in the case of other physical damage, they are unable to fulfil their function.

Furthermore, according to the known solutions, the RFID tags attached to waste containers are pre-written, they already contain a unique identifier.

The aim of the invention is to provide a waste collection bag that has a paper-based RFID tag written with unique identification data attached to it in a location where an RFID reader system can easily read the data stored/written on the RFID tag, and thereby determine whether the waste removal service is used legally, and to provide the RFID tag with adequate protection.

Another aim is to provide a method and apparatus for inserting an RFID tag into a waste collection bag in such way that the RFID tag is securely attached and written with unique identification data during the manufacturing of the waste collection bag. It shall be able to make waste collection bags equipped with a tag cost-effectively, in large quantities and quickly, in such a way that the RFID tag written with unique identification data is contained securely in the bag, and thus it can perform its task regardless of the weather conditions or any other damage.

The idea of the invention is based on the recognition that if an RFID tag is attached to the bottom of a waste collection bag in such a way that from the own material (film) of the waste collection bag a sealed pocket is formed around the RFID tag, and the RFID tag already inserted into the pocket is written with unique identification data, then the pocket provides maximum protection for the RFID tag written with data, and allows it to be read by an RFID reader system.
The way in which waste collection bags are collected shall also be taken into account. Waste collection bags filled with waste are collected in such a way that the bags are thrown into the back of a waste collection vehicle - garbage truck - at a high speed, that is the RFID reader system itself shall be designed so that the RFID tag is read at the moment of throwing - as only this way can it fulfil the function for which it is intended.

Thus, the invention relates to a waste collection bag equipped with an RFID tag, and a method and an apparatus for inserting an RFID tag into a waste collection bag.

The apparatus, the machine inserting an RFID tag into a waste collection bag, consists of five main parts. The first main part comprises a roll holder unit. The second main part consists of an unwinding unit and a tag inserting unit. The third main part includes a pocket making unit and a tag writing unit, as well as three positioning rollers. The fourth main part consists of a feeding unit and a control unit. The fifth main part comprises a semi-automatic winding unit.

The main parts of the apparatus are independent of each other, the elements of each main part are mounted on a support frame element, and the support frame elements are joined to form the machine frame of the apparatus.
In the description the waste collection bag is abbreviated to bag, the RFID tag to tag, and the machine frame refers to all the support frame elements of the main parts joined together.

The first main part of the apparatus comprises a roll holder unit attached to the front of the machine frame. The roll holder unit has an unwinding shaft mounted firmly on the machine frame, on which tubular film is loaded in a wound state, in the form of a roll. The tubular film is double-layer endless film sealed on two sides, made of regranulate polyethylene (PE). The roll holder unit ensures the even, wrinkle-free unwinding of the tubular film.

The second main part of the apparatus consists of an unwinding unit comprising a pair of pre-pullingrollers and a dancer assembly.
The second main part also contains a tag inserting unit, the function of which is to glue a paper-based tag on the top surface of the tubular film. The tags are attached to a paper backing layer, and the tags are wound together with the paper backing layer. The wound paper backing layer carrying the tags forms a tag roll. The tag inserting unit comprises two rollers and a pressing element. The tag inserting unit stores the tag roll on one of the two rollers, and ensures that the tag roll is unwound at the desired tension, adjusts the appropriate gluing position, separates the RFID tag from the paper backing layer, then with the pressing element glues it to the tubular film. Finally, the backing paper without the tags is wound onto the second roller.

The third main part includes a pocket making unit and a tag writing unit, as well as three positioning rollers: a first positioning roller, a second positioning roller and a third positioning roller. A manipulation table is mounted in the upper part of the apparatus, extending from the beginning of the third main part, under the first and second positioning rollers, to the tag writing unit, and providing support for the tubular film. The tag inserting unit is mounted in the second main part, but its pressing element is located above the tubular film entering the third main part, before the first positioning roller, so the tag is glued to the film in the third main part.

The first positioning roller synchronizes the position of the already glued-on tag with the position of pocket making. The first positioning roller is adjusted manually.
The pocket making unit comprises: two turning forks, two gripping elements, two reinforcing welding heads and a pocket fixing welding head. The turning forks, the gripping elements and the reinforcing welding heads are mounted on the upper part of the sides of the machine frame, while the pocket fixing welding head is connected to both sides of the machine frame, and is positioned above the machine frame according to the position of the glued-on tag.
The pocket making unit folds back the tubular film to an extent necessary for making a pocket - for covering the tag, in such a way that the tubular film below the tag is lifted, and the lifted portion is folded onto the tag to cover the tag with a margin, so the tag gets inside a pocket.

This is done in such a way that, as a first step, after the pulling of the tubular film stops, the two lateral turning forks assume their inner position, the tubular film gets between the turning forks, then the, turning forks are rotated 270 degrees, creating a fold in the tubular film, which functions as a pocket for the tag after welding. As a second step, the gripping elements assume a position different from their base position, gripping the fold formed in the tubular film, thereby securing the pocket formed by folding. Then the turning forks assume their base position and, as a third step, the two reinforcing welding heads and the pocket fixing welding head move into position. The reinforcing welding heads form a side weld on the two sides of the pocket (at the two edges of the tubular film), and the pocket fixing welding head welds the portion below the tag to create a partial weld, with these welds the pocket is secured (partially fixed). Welding is performed for a set welding time, at a given temperature. The welding temperature can be set with a temperature controller. After the completion of the welding operation, the tubular film moves to the second positioning roller, which synchronizes the position of the tag with the position of the tag writing unit.

The function of the tag writing unit is to write a unique identifier to the factory preset writeable memory area of the tag. The unique identifier identifies the tag for a given service - thereby preventing abuse. After the completion of writing, this writeable area becomes password protected and read-only for other systems. The tag writing unit is controlled via a computer, which can also be operated remotely. After the completion of writing, the computer sends an enable signal to the control unit of the apparatus, enabling it to start writing the next tag.

The tubular film equipped with a pocket containing a written tag moves to the third positioning roller, which synchronizes the position of the pocket with a bottom-top welding head in the feeding unit included in the fourth main part, then the tubular film passes through the individual parts of the feeding unit, an anti-static ionizing bar, a row of blowers and a pair of feeding rollers.
The anti-static ionizing bar neutralizes the static electricity on the surface of the tubular film for easier handling during winding. The row of blowers and the pair of feeding rollers ensure the appropriate feeding of the film to the bottom-top welding head.

The bottom-top welding head comprises gripping elements, a welding blade and a perforating toothed blade. The function of the bottom-top welding head is to completely seal the pocket at the bottom and at the top of the tag with a complete weld, across the entire width of the tubular film. The tubular film is perforated by the perforating toothed blade along the complete weld located at the bottom of the pocket, and a bag is formed. The portion of the tubular film extending from the perforation made in this way to the next perforation, equipped with a pocket containing a written tag, forms a bag. The pocket containing the written tag forms the bottom of the bag down to the perforation line, and the perforation line forms the filling opening / mouth of the next bag separated along the perforation line.

The fourth main part also includes the control unit of the apparatus with stand-alone software. The control unit is mounted on the machine frame from above, and is equipped with a start button. After switching on, the individual units of the apparatus are reset. The control unit coordinates the individual work phases, activates the apparatus, it can switch off and switch on, stop and restart the apparatus, furthermore, the control unit detects if a tag is glued on or written incorrectly. The control unit counts the number of bags made, and can be used to set the welding time and feeding speed for tubular films of different material thicknesses. The control unit ensures that the tag to be inserted into the pocket of a bag of a given width and desired length is glued, attached to the film and written in the proper position, i.e. that the elements performing these operations are synchronized with each other. The control unit is also responsible for synchronizing the individual units with each other. An emergency stop is also possible, if any defect is detected by the operator. The control unit has a stand-alone program that starts automatically when the apparatus is started. The control unit comprises a touch screen data entry unit, through which the data required for manufacturing can be entered.

After perforation, the tubular film consisting of bags moves to a semi-automatic winding unit in the fifth main part. The semi-automatic winding unit consists of a pulling dancer assembly, a C-folding unit and a winding mandrel. The pulling dancer assembly is a pneumatic pre-tensioned dancer assembly connected to both sides of the machine frame. The function of the pulling dancer assembly is to pull the film out from under the bottom-top welding head, and to ensure the track tension. The C-folding unit is mounted on the upper part of the machine frame. The function of the C-folding unit is to fold the edges of the tubular film already consisting of formed bags to a given/set size. It has an upper roller with a baffle plate on each side. The two baffle plates guide the two edges of the tubular film towards the centreline of the bag, and fold them over the middle part of the bag.
Maximum ¼ of the width of the bag can be folded over on each side. The purpose of folding is aesthetic, and to ensure easier handling and packaging due to a reduction in size. The tubular film consisting of bags folded to a given size is wound into rolls by the winding mandrel. The winding mandrel, which has an asynchronous motor, is mounted on the side of the machine frame from the inside in such a way that it points in the direction of the centreline of the apparatus.
The essence of the method according to the invention, implemented by the apparatus described above, is to make waste collection bags of a desired size from tubular film, where each waste collection bag comprises a pocket formed at the bottom of the bag, and the pocket contains a written RFID tag sealed into it.

For the method, the tubular film material of the waste collection bags is manually threaded through all five main parts of the apparatus. From the programs of the control unit, the program appropriate for the desired bag size is selected, then the apparatus is activated by pushing the start button on the control unit. The tubular film starts to move, and a tag is glued to the tubular film pre-pulled from the dancer assembly, and in the next step a pocket is formed around the attached tag by lifting a portion of the tubular film below the tag (relative to the direction of movement of the tubular film), and then folding the lifted portion onto the tag and partially fixing the folded portion with side welds and a partial weld. Then the RFID tag is written with unique identification data, and the pocket is finally sealed with complete welds across the entire width of the tubular film. In the next step, by making perforations, the final form of the waste collection bag is formed, and in the last step the waste collection bags are wound into a roll.
The waste collection bags according to the invention are removed from the apparatus and stored/distributed in rolls, and consumers use the bags by separating them along the perforation.

The material of the waste collection bag according to the invention is double-layer endless tubular film sealed on two sides, made of regranulate polyethylene (PE), having a material thickness of between 8 µm and max. 250 µm. The width of the waste collection bag is determined by the given tubular film, while the length of the waste collection bag (between 80 mm and 130 mm) can be determined by selecting the appropriate software of the control unit. One bag is equipped with one tag, the width of the pocket is determined by the size of the tag.

In a preferred embodiment the waste collection bag is 60 cm wide and 110 cm long. At the bottom of the waste collection bag a 3 cm pocket is formed across the entire width thereof. The pocket encloses an RFID tag containing unique identification data, having a size of 12 x 100 mm. The RFID tag is in the middle of the pocket.

The apparatus and the waste collection bag according to the invention are described in detail with reference to the following figures, but without being limited thereto.
Figure 1 shows a side view of the apparatus according to the invention,
Figure 2 shows a top view of the third main part of the apparatus according to the invention,
Figure 3 shows a top view of bags formed from tubular film.

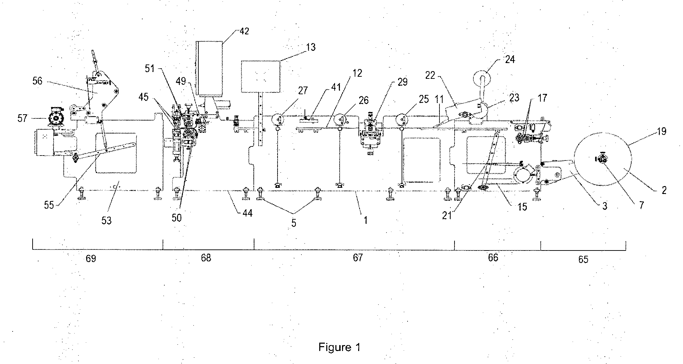

Figure 1 shows the five main parts of the apparatus, and the connection of the elements of the main parts to the machine frame 1. The machine frame 1 is stabilized with legs 5.

The first main part 65 comprises a roll holder unit 3. The second main part 66 consists of an unwinding unit 15 and a tag inserting unit 22. The third main part 67 includes three positioning rollers: a first positioning roller 25, a second positioning roller 26 and a third positioning roller 27, as well as a pocket making unit 29 and a tag writing unit 41. The fourth main part 68 consists of a feeding unit 44 and a control unit 42. The fifth main part 69 comprises a semi-automatic winding unit 53.

The first main part 65 includes a roll holder unit 3, which is connected to the front of the machine frame 1, on the outside thereof. Tubular film 19 is loaded on an unwinding shaft 7 in the roll holder unit 3 in a wound state, in the form of a roll 2. The roll 2 is fixed by means of a cone on each side of the unwinding shaft 7. The unwinding shaft 7 is mounted firmly on the machine frame 1. One side of the unwinding shaft 7 is equipped with an edge adjuster (not shown in the figure). The braking of the roll 2 moving on the unwinding roller 7 is controlled by a felt-covered drag plate, the braking force of which can be adjusted by weights, thereby ensuring the tension of the tubular film 19 during movement.

The second main part 66 of the apparatus consists of an unwinding unit 15 and a tag inserting unit 22. A pair of pre-pulling rollers 17 is mounted on the side of the machine frame 1 from the inside, the tubular film 19 moves from the roll holder unit 3 through the pair of pre-pulling rollers 17 to the unwinding unit 15, and then to a dancer assembly 21, where the pneumatic rollers of the dancer assembly 21 maintain the tension of the tubular film 19. The unwinding unit 15 is also equipped with a run-out sensor.
A tag inserting unit 22 is mounted on the upper part of the machine frame 1 above the dancer assembly 21, in a movable manner above the tubular film 19 across the entire width of the tubular film 19. The tag inserting unit 22 has two rollers, one for storing a tag roll 24 containing tags 20, and the other for storing a roll of paper backing layer 23 (which no longer contains tags). The tag inserting unit 22 has a pressing element 11, which attaches the tag 20 to the tubular film 19.

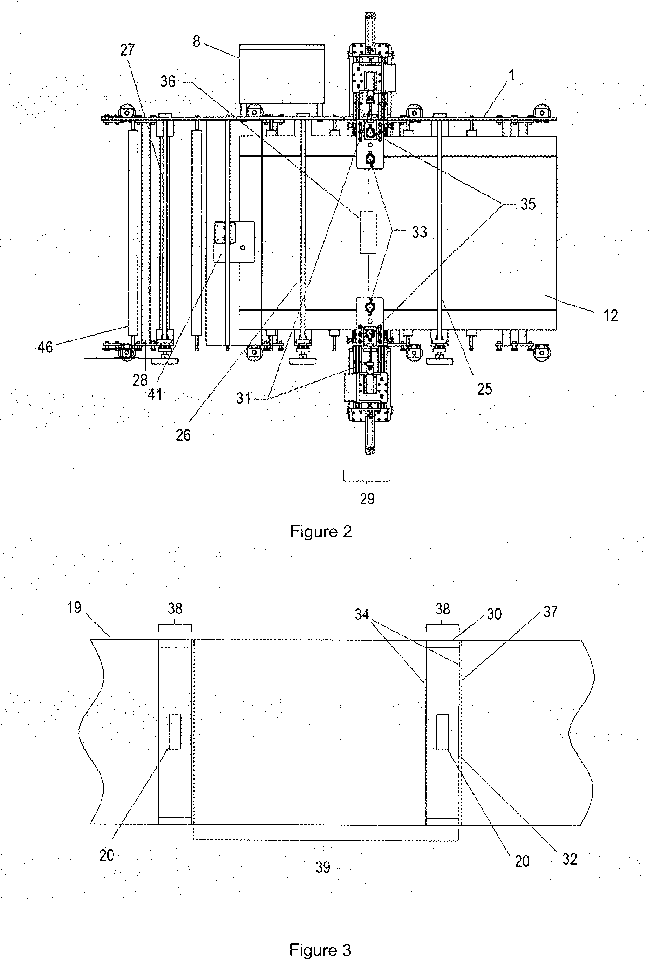

The third main part 67 includes three positioning rollers: a first positioning roller 25, a second positioning roller 26 and a third positioning roller 27, as well as a pocket making unit 29 and a tag writing unit 41. The pocket making unit 29, shown in detail in Figure 2, is mounted on the upper part of the machine frame 1 in a movable manner between the first positioning roller 25 and the second positioning roller 26, while the tag writing unit 41 between the second positioning roller 26 and the third positioning roller 27. A temperature controller 8 is mounted firmly on the machine frame 1.

A manipulation table 12 extends along the whole length of the third main part 67 in the upper part of the apparatus, which provides support for the tubular film 19 during tag gluing, pocket making and tag writing.

The fourth main part 68 consists of a feeding unit 44 and a control unit 42.
The elements of the feeding unit 44, an anti-static ionizing bar 49, a row of blowers 50, a pair of feeding rollers 51 and a bottom-top welding head 45, are mounted on the machine frame 1. The pair of feeding rollers 51 consists of two ground, soft-rubber covered metal rollers with bores into which the row of blowers 50 fits. The bottom-top welding head 45 comprises gripping elements, a welding blade and a perforating toothed blade.

The fifth main part 69 comprises a semi-automatic winding unit 53. The semi-automatic winding unit 53 consists of a pulling dancer assembly 55, a C-folding unit 56 and a winding mandrel 57. The pulling dancer assembly 55 is a pneumatic pre-tensioned dancer assembly, which pulls the tubular film 19 containing the bags from under the bottom-top welding head 45, and conveys it to the C-folding unit 56.

Figure 2 shows a top view of the third main part 67. The pocket making unit 29 mounted on the two sides of the machine frame 1 has a turning fork 31, a gripping element 33 and a reinforcing welding head 35 on each side, and a pocket fixing welding head 36 in the middle. The three positioning rollers and the tag writing unit 41 are mounted on the upper part of the machine frame 1. In the shown embodiment, the pocket fixing welding head 36 and the tag writing unit 41 are positioned above the machine frame 1 in the middle, then the tag 20 is glued to the middle of the tubular film 19. After the third positioning roller 27, in parallel with it, there is a guide roller 28 and an aluminium roller 46. The guide roller 28 and the aluminium roller 46 convey the tubular film 19 equipped with a pocket 38 containing a tag 20 to the fourth main part 68.
Figure 3 shows a top view of a complete bag 39 formed from the tubular film 19, and the previous and next bags 39 are shown partially. The pocket 38 containing a written tag 20 is located at the bottom of the bag 39. There is a complete weld 34 at the bottom and at the top of the pocket 38 across the entire width of the tubular film 19, there are side welds 30 on the two sides of the pocket 38, while there is a partial weld 32 below the tag 20 positioned in the middle. There is a perforation line 37 below the complete weld 34 at the bottom of the pocket 38, which forms the opening of the next bag 39 when the bag 39 is used.

Before the apparatus is started electronically, the operator loads a roll 2 into the roll holder unit 3, and fixes it by means of cones on the unwinding shaft 7. The positioning of the roll 2 on the centreline is greatly facilitated by a mechanic, manually adjustable edge adjuster included in the roll holder unit 3.
After the positioning of the roll 2, the operator threads the tubular film 19 between the pair of pre-pulling rollers 17 of the unwinding unit 15, then manually threads it through the main parts of the apparatus, and adjusts the three positioning rollers to the position of the given tubular film 19 so that the tag 20 gluing position, the pocket 38 making position, the tag 20 writing position and the pocket 38 welding position are synchronized with each other. The positioning rollers can be adjusted manually in the vertical direction by turning their adjuster wheels.
Then the operator selects from the programs of the control unit 42 the program appropriate for inserting a tag 20 in the bottom part of bags 39 of the desired bag size, and activates the apparatus by pushing the start button on the control unit 42.
The unwinding shaft 7 can be moved laterally by means of the edge adjuster, and thereby the roll 2 on the unwinding shaft 7 can be positioned on the centreline of the apparatus. The edge adjuster is mechanical, manually adjustable. The maximum lateral displacement of the unwinding shaft 7 is 100 mm. Rolls 2 of a maximum width of 900 mm and a maximum diameter of 600 mm can be loaded on the unwinding shaft 7. The braking of the roll 2 moving on the unwinding roller 7 is controlled by a felt-covered drag plate, the braking force of which can be adjusted by weights, thereby ensuring the tension of the tubular film 19 during movement.

During the operation of the apparatus, the pair of pre-pulling rollers 17 pre-pulls the tubular film 19 from the roll holder unit 3 into the unwinding unit 15, and fills the dancer assembly 21. The surface of the pair of pre-pulling rollers 17 is precision ground, thereby it is in hermetic contact with the tubular film 19. The tubular film 19 moves between the pneumatic rollers of the dancer assembly 21 in a tensioned state, the tension is regulated by the pressure of the air applied to the pneumatic rollers. The movement of the dancer assembly 21 is controlled by a dancer assembly sensor. The dancer assembly sensor sets the speed of the pair of pre-pulling rollers 17 on the basis of the position of the dancer assembly 21. When the dancer assembly 21 is filled with tubular film 19, this is detected by the "dancer assembly sensor" and the pre-pulling of the tubular film 19 is stopped. The pulling of the tubular film 19 from the dancer assembly 21 filled with tubular film 19 to the pocket making unit 29 resumes when the final form of the bag 39 is formed on the tubular film 19 currently in the feeding unit 44, and the tubular film 19 containing the bag 39 is wound in the winding unit 53. Then the feeding unit 44 pulls the tubular film 19 to make the next pocket 38, and to form the final form of the next bag 39. The dancer assembly sensor detects the amount of tubular film 19 pulled from the dancer assembly 21 and restarts pre-pulling, thereby the dancer assembly 21 is again filled with tubular film 19.

There is a run-out sensor in the unwinding unit 15, which indicates the run-out of the tubular film 19 and monitors the tension of the tubular film 19. The run-out sensor is a reflective, background suppression optical sensor.
The tag inserting unit 22 glues a tag 20 to the tubular film 19 pulled from the dancer assembly 21 in the set gluing position. The tag 20 gluing position is positioned by the control unit 42, thereby ensuring that the tag 20 is glued to the tubular film 19 always in the proper position.
The tag roll 24 comprises tags 20 attached to a paper backing layer 23. The tag roll 24 is unwound from one roller of the tag inserting unit 22, the tag 20 is separated from the paper backing layer 23, the separated tag 20 is attached by the tag pressing element 11 to the tubular film 19 coming from the dancer assembly 21, and the paper backing layer 23 (without tag) is wound on the other roller of the tag inserting unit 22. The maximum width of the tag 20 is 120 mm.

The pocket 38 around the tag 20 glued to the tubular film 19 is made in the pocket making unit 29. The tubular film 19 passes the first positioning roller 25. The first positioning roller 25 synchronizes the tag 20 gluing position with the pocket 38 making position on the tubular film 19.
During pocket making, the movement of the tubular film 19 stops and, as a first step, the turning forks 31 assume a position different from their base position, as a result of which the tubular film 19 gets between the teeth of the turning forks 31. The teeth of the turning forks 31 are rotated forward 270 degrees in the direction of travel of the tubular film 19, and thereby pull enough tubular film 19 from the dancer assembly 21, winding it around the teeth of the turning forks 31, to form a fold in the tubular film 19 around the tag 20 during the forward rotation. This is done in such a way that the turning forks 31 lift the tubular film 31 below the tag 20 glued to the tubular film 19 at a distance corresponding to the width of the pocket to be made, and the lifted portion is folded onto the tag 20. This way the tag 20 is covered by a double layer of the tubular film 19. The double layer of the tubular film 19 folded back in this way forms the top layer of the pocket 38.

As a second step of pocket 38 making, the gripping elements 33 assume a position different from their base position, grip the tubular film 19, and then the turning forks 31 assume their base position and the reinforcing welding heads 35 weld the edges of the folded back tubular film 19, making the side welds 30, and the pocket fixing welding head 36 fixes the tubular film 19 folded onto the tag 20 with a partial weld 32, and thereby secures the pocket 38 formed by folding. After the formation of the pocket 38 and the welding operations, the tubular film 19 equipped with a pocket 38 containing a tag 20 moves to the second positioning roller 26. The second positioning roller 26 synchronizes the position of the tag 20 in the pocket 38 with the position of the tag writing unit 41. After detecting the tag 20, the tag writing unit 41 writes digital identification data to the memory of the tag 20 as instructed by the computer, then after completing the data writing operation, it moves the tubular film 19 to get the next (unwritten) tag 20, as the next tag 20 can be written only after that. The computer can also be operated remotely.
The tubular film 19 equipped with a pocket 38 containing a tag 20 written with data moves to the third positioning roller 27. The third positioning roller 27 synchronizes the position of the pocket 38 containing the tag 20 with the bottom-top welding head 45 in the feeding unit 44.

The function of the feeding unit 44 is to pull the tubular film 19 to size. The static electricity on the surface of the tubular film 19 pulled to size is neutralized by an anti-static ionizing bar 49, this makes the tubular film 19 easy to handle during winding. From the anti-static ionizing bar 49 the tubular film 19 is led through a pair of feeding rollers 51 by a row of blowers 50. The row of blowers 50 prevents the tubular film 19 from sticking to the pair of feeding rollers 51, and together with the pair of feeding rollers 51 ensures the appropriate feeding of the tubular film 19 to the winding unit 53.

The pair of feeding rollers 51 comprises two rollers which are located below each other and are driven together by a gear. The rollers are rotated by a 1.5 Kw servo motor via a ½ toothed V-belt. The two rollers are compressed by springs. The rollers are supported in the middle to ensure that the compressive force acts evenly on the rollers. The compressive force acting on the pair of feeding rollers 51 can be adjusted by means of a threaded spindle. The force can be adjusted separately on both sides to correct film defects.
The tubular film 19 is pulled by the pair of feeding rollers 51 to the bottom-top welding head 45. The bottom-top welding head 45 comprises gripping elements, a welding blade and a perforating toothed blade. The bottom-top welding head 45 completely welds the tubular film 19 around the tag 20 at the bottom of the pocket 38, in the line of the partial weld 32 made by the pocket fixing welding head 36, and at the top of the pocket 38, across the entire width thereof, making a complete weld 34 at the bottom and at the top of the pocket 38, and thereby completely sealing the tag 20 in the pocket 38. Below the bottom complete weld 34, at a distance of minimum 7 mm from it, a perforating toothed blade perforates the tubular film 19 across the entire width thereof, making a perforation 37, and thereby forming the final form of the bag 39.

The bag 39 in its final form moves to the semi-automatic winding unit 53. The function of the semi-automatic winding unit 53 is to fold and wind the bags 39.
The bags 39 are pulled from under the bottom-top welding head 45 and moved to a C-folding unit 56 by a pulling dancer assembly 55. The pulling dancer assembly 55 is a pneumatic pre-tensioned dancer assembly. The C-folding unit 56 folds the edges of the bag 39 containing a tag 20 to the desired size, maximum ¼ of the width of the bag 39 can be folded over on each side. The bag 39 can be folded to half of its original width. The purpose of folding is aesthetic, and to ensure easier handling and packaging due to a reduction in size.
The C-folded bag 39 is attached to a winding mandrel 57 and wound. The winding mandrel 57 has an asynchronous motor, the output speed of which can be regulated. After winding the appropriate number of pieces, the winding stops, the finished roll is pulled off manually from the slotted mandrel 57, and a bag 39 for starting the next roll is threaded into it manually.
After winding the set number of pieces, the finished roll needs to be removed manually from the winding mandrel 57, and the tubular film 19 needs to be threaded into it manually for making the next roll.

### List of reference numbers

- 1: machine frame
- 2: roll (= semi-finished, endless tubular film sealed on two sides)
- 3: roll holder unit
- 5: leg
- 7: unwinding shaft
- 8: temperature controller
- 11: pressing element
- 12: manipulation table
- 13: display
- 15: unwinding unit
- 17: pair of pre-pulling rollers
- 19: tubular film
- 20: RFID tag
- 21: dancer assembly
- 22: tag inserting unit
- 23: paper backing layer
- 24: tag roll
- 25: first positioning roller
- 26: second positioning roller
- 27: third positioning roller
- 28: guide roller
- 29: pocket making unit
- 30: side weld
- 31: turning forks, 1 on each side
- 32: partial weld
- 33: gripping elements, 1 on each side
- 34: complete weld
- 35: reinforcing welding head
- 36: pocket fixing welding head
- 37: perforation
- 38: pocket
- 39: waste collection bag
- 41: tag writing unit
- 42: control unit
- 44: feeding unit
- 45: bottom-top welding head
- 46: aluminium roller
- 49: anti-static ionizing bar
- 50: row of blowers
- 51: pair of feeding rollers
- 53: semi-automatic winding unit
- 55: pulling dancer assembly
- 56: C-folding unit
- 57: winding mandrel
- 65: first main part
- 66: second main part
- 67: third main part
- 68: fourth main part
- 69: fifth main part

## Claims

1. Apparatus for inserting an RFID tag into a waste collection bag having five main parts: a first main part (65) comprising a roll holder unit (3) including an unwinding shaft (7) on which tubular film 19 is loaded, a second main part (66) consisting of an unwinding unit (15) and a movable tag inserting unit (22), a third main part (67) including a pocket making unit (29) and a tag writing unit (41), as well as three positioning rollers: a first positioning roller (25), a second positioning roller (26) and a third positioning roller (27), a fourth main part (68) consisting of a feeding unit (44) and a control unit (42), and a fifth main part (69) comprising a semi-automatic winding unit (53), the individual main parts are joined together by a machine frame (1),
**characterized in that**
the pocket making unit (29) of the third main part (67), which is located between the first positioning roller (25) and the second positioning roller (26), consists of two turning forks (31), two gripping elements (33), as well as two reinforcing welding heads (35) and a pocket fixing welding head (36) equipped with a temperature controller (8), the tag writing unit (41) is mounted on the upper part of the machine frame (1) between the second positioning roller (26) and the third positioning roller (27), furthermore the third main part (67) is also equipped with a manipulation table (12) mounted in the upper part of the machine frame (1).

2. The apparatus according to claim 1, **characterized in that** the turning forks (31), the gripping elements (33) and the reinforcing welding heads (35) are mounted on the upper part of the sides of the machine frame (1).

3. The apparatus according to claim 1, **characterized in that** the pocket fixing welding head (36) is connected to both sides of the machine frame (1), in a movable manner above the machine frame (1).

4. The apparatus according to claim 1, **characterized in that** the tag writing unit (41) is connected to both sides of the machine frame (1), in a movable manner above the machine frame (1).

5. The apparatus according to any of claims 1 to 4, **characterized in that** the pocket fixing welding head (36) and the tag writing unit (41) are aligned with a glued-on RFID tag (20).

6. Method for inserting an RFID tag into a waste collection bag, which is implemented by the apparatus according to claim 1, comprising the following steps:
tubular film (19) used as the material of the waste collection bags (39) is manually threaded through the five main parts of the apparatus according to claim 1, and after setting the control unit (42) the apparatus is activated, then the tubular film (19) automatically moves from the direction of the first main part (65) in the direction of the fifth main part (69), and after gluing the RFID tag (20) to the tubular film (19), making a pocket (38) and writing the RFID tag (20), waste collection bags (39) are formed from the tubular film (1) by making perforations (37), and finally the waste collection bags (39) are wound into rolls,
**characterized in that**
during pocket (38) making, after lifting the tubular film (19) below the RFID tag (20) and folding the lifted portion onto the RFID tag (20), the folded over portion is partially fixed by side welds (30) and a partial weld (32), then the RFID tag (20) is written with unique identification data, and the pocket (38) is finally fixed by complete welds (34).

7. A waste collection bag containing an RFID tag, which RFID tag (20) is inserted into the bottom part of the waste collection bag (39) formed from tubular film (19), **characterized in that** the written RFID tag (20) is in the sealed pocket (38) formed from the tubular film (19).

8. A waste collection bag containing an RFID tag, which RFID tag (20) is inserted into the bottom part of the waste collection bag (39) formed from tubular film (19), **characterized in that** the RFID tag (20) is in the middle of the pocket (38).
